# EUROPEAN PATENT APPLICATION

(11) **EP 4 844 692 A1**
(43) Date of publication of application: **25.11.2026**
(21) Application number: 24919966.2
(22) Date of filing: 19.12.2024
(51) Int. Cl.: G06T 19/20, G06T 7/73, G06T 19/00, G06V 10/82, G06V 10/86, G06V 40/20, G06N 3/045

(54) **GESTURE DATA COMPLETION METHOD AND APPARATUS FOR THREE-DIMENSIONAL OBJECT, DEVICE, STORAGE MEDIUM, AND PRODUCT**

(30) Priority: 26.01.2024 CN 202410113465
(71) Applicant: Tencent Technology (Shenzhen) Company Limited, Shenzhen, Guangdong 518057 (CN)
(72) Inventor: YANG, Siqi, Shenzhen, Guangdong 518057 (CN); YANG, Zejun, Shenzhen, Guangdong 518057 (CN)
(74) Representative: EP&C
(86) International application number: PCT/CN2024/140519
(87) International publication number: WO 2025/156888

(57) **Abstract**

This application discloses a posture data completion method and apparatus for a three-dimensional object, a device, a storage medium, and a product, and belongs to the field of artificial intelligence technologies. The method includes: obtaining three-dimensional incomplete posture data of a three-dimensional object in a preset posture, where the three-dimensional incomplete posture data includes first three-dimensional joint point data of some joint points of the three-dimensional object; invoking a text-to-image model to generate a two-dimensional posture image of the three-dimensional object in the preset posture according to the three-dimensional incomplete posture data and a posture description text, where the posture description text is configured for describing the preset posture; performing joint point recognition on the two-dimensional posture image to obtain second three-dimensional joint point data of missing joint points; and adding the second three-dimensional joint point data to the three-dimensional incomplete posture data to obtain three-dimensional complete posture data of the three-dimensional object. This method can quickly complete the missing joint points in posture data of the three-dimensional object.

## Description

### RELATED APPLICATION

This application claims priority to Chinese Patent Application 202410113465.1, filed with the China National Intellectual Property Administration on January 26, 2024 and entitled "POSTURE COMPLETION METHOD AND APPARATUS FOR THREE-DIMENSIONAL OBJECT, DEVICE, STORAGE MEDIUM, AND PRODUCT", which is incorporated herein by reference in its entirety.

### FIELD OF THE TECHNOLOGY

Embodiments of this application relate to the field of artificial intelligence technologies, and in particular, to a posture data completion technology for a three-dimensional object.

### BACKGROUND OF THE DISCLOSURE

With the development of computer technologies, a three-dimensional object may be created by using a computer program or an artificial intelligence technology, and the three-dimensional object may simulate behavior and dialogue of a person or an animal.

For a three-dimensional object that only has some limb posture data but does not have a hand posture, in the related art, a plurality of hand actions are independently captured by using an action capture glove to construct a hand action library, and when a hand action of the three-dimensional object needs to be driven, searching and matching are directly performed in the hand action library, to precisely drive the three-dimensional object.

However, the manner of constructing the hand action library by using the action capture glove in the related art consumes a large amount of manpower and material resources, and a matching degree between the captured hand actions and limb actions of the three-dimensional object is poor.

### SUMMARY

The present disclosure provides a method and apparatus for generating posture data of a three-dimensional object, a device, a storage medium, and a product. Technical solutions are as follows:

According to an aspect of the present disclosure, a method for generating posture data of a three-dimensional object is provided, generating posture data of by a computer device, and the method including:
obtaining three-dimensional incomplete posture data of the three-dimensional object in a preset posture, where the three-dimensional incomplete posture data includes first three-dimensional joint point data of the three-dimensional object;
generating a two-dimensional posture image of the three-dimensional object in the preset posture applying by the three-dimensional incomplete posture data and a posture description text to a text-to-image model of the preset posture;
performing joint point recognition on the two-dimensional posture image to obtain second three-dimensional joint point data of the three-dimensional object; and
combining the second three-dimensional joint point data and the three-dimensional incomplete posture data to obtain three-dimensional complete posture data of the three-dimensional object.

According to an aspect of the present disclosure, an apparatus for generating posture data of a three-dimensional object is provided, the apparatus including:
a data module, configured to obtain three-dimensional incomplete posture data of the three-dimensional object in a preset posture, where the three-dimensional incomplete posture data includes first three-dimensional joint point data of the three-dimensional object;
a generation module, configured to generate a two-dimensional posture image of the three-dimensional object in the preset posture applying by the three-dimensional incomplete posture data and a posture description text to a text-to-image model of the preset posture;
a recognition module, configured to perform joint point recognition on the two-dimensional posture image to obtain second three-dimensional joint point data of the three-dimensional object; and
a combination module, configured to combine the second three-dimensional joint point data and the three-dimensional incomplete posture data to obtain three-dimensional complete posture data of the three-dimensional object.

According to another aspect of the present disclosure, a computer device is provided, including a processor and a memory, where the memory has at least one computer program stored therein, and the at least one computer program is loaded and executed by the processor to implement the posture data completion method for a three-dimensional object according to the foregoing aspect.

According to another aspect of the present disclosure, a computer storage medium is provided, having at least one computer program stored therein, where the at least one computer program is loaded and executed by a processor to implement the posture data completion method for a three-dimensional object according to the foregoing aspect.

According to another aspect of the present disclosure, a computer program product is provided, including a computer program, where the computer program is stored in a computer-readable storage medium; and the computer program is read from the computer-readable storage medium and executed by a processor of a computer device, to cause the computer device to perform the posture data completion method for a three-dimensional object according to the foregoing aspect.

Beneficial effects brought by the technical solutions provided in the present disclosure at least include the following.

Three-dimensional incomplete posture data of a three-dimensional object in a preset posture and a posture description text are obtained, where the three-dimensional incomplete posture data includes first three-dimensional joint point data of some joint points of the three-dimensional object, and the posture description text is configured for describing the preset posture. The three-dimensional incomplete posture data and the posture description text are then inputted into a text-to-image model, since the text-to-image model has a feature of controlling accurate generation of an image according to a text, the text-to-image model can generate a two-dimensional posture image of the three-dimensional object in the preset posture according to the three-dimensional incomplete posture data and the posture description text, where a generated object in the two-dimensional posture image has a complete preset posture, so that postures of missing joint points can be embodied. In this way, by performing recognition and extraction on joint points of the generated object in the two-dimensional posture image, second three-dimensional joint point data of the missing joint points can be obtained, and by combining the second three-dimensional joint point data and the three-dimensional incomplete posture data, the three-dimensional incomplete posture data can be completed to obtain three-dimensional complete posture data of the three-dimensional object, that is, complete posture data. In the present disclosure, for a three-dimensional object that does not have postures of missing joint points, a two-dimensional posture image having a complete preset posture can be directly generated by using a text-to-image model based on posture data of some joint points in three-dimensional incomplete posture data and a posture description text, and a posture of the three-dimensional object can be completed by using second three-dimensional joint point data extracted from the two-dimensional posture image without additionally collecting the postures of the missing joint points to construct an action library, thereby greatly reducing consumption of manpower and material resources, improving posture data completion efficiency of the three-dimensional object, and improving utilization of open-source three-dimensional posture data without limb postures. In addition, the posture data completed by using this method can perfectly match original incomplete posture data of the three-dimensional object, thereby improving a posture data completion effect of the three-dimensional object.

### BRIEF DESCRIPTION OF THE DRAWINGS

To describe technical solutions of embodiments of the present disclosure more clearly, the following briefly introduces the accompanying drawings required for describing the embodiments. Apparently, the accompanying drawings in the following descriptions show only some embodiments of the present disclosure, and a person of ordinary skill in the art may derive other accompanying drawings from the accompanying drawings without creative efforts.
FIG. 1 is a schematic diagram of a posture data completion method for a three-dimensional object according to an embodiment of the present disclosure.
FIG. 2 is a schematic architectural diagram of a computer system according to an embodiment of the present disclosure.
FIG. 3 is a flowchart of a posture data completion method for a three-dimensional object according to an embodiment of the present disclosure.
FIG. 4 is a schematic diagram of a posture data completion method for a three-dimensional object according to another embodiment of the present disclosure.
FIG. 5 is a flowchart of a posture data completion method for a three-dimensional object according to another embodiment of the present disclosure.
FIG. 6 is a schematic diagram of a posture skeleton image according to an embodiment of the present disclosure.
FIG. 7 is a schematic diagram of a text-to-image model and a posture control plug-in according to an embodiment of the present disclosure.
FIG. 8 is a schematic diagram of a text-to-image model and a posture control plug-in according to another embodiment of the present disclosure.
FIG. 9 is a schematic diagram of a text-to-image model and a posture control plug-in according to another embodiment of the present disclosure.
FIG. 10 is a flowchart of a posture data completion method for a three-dimensional object according to another embodiment of the present disclosure.
FIG. 11 is a schematic diagram of similarity matching according to an embodiment of the present disclosure.
FIG. 12 is a flowchart of a posture data completion method for a three-dimensional object according to another embodiment of the present disclosure.
FIG. 13 is a block diagram of a posture data completion apparatus for a three-dimensional object according to an embodiment of the present disclosure.
FIG. 14 is a schematic structural diagram of a computer device according to an embodiment of the present disclosure.

### DESCRIPTION OF EMBODIMENTS

To make objectives, technical solutions, and advantages of the present disclosure clearer, implementations of the present disclosure are further described in detail below with reference to the accompanying drawings.

Solutions provided in embodiments of the present disclosure relate to technologies such as computer vision of artificial intelligence, and are specifically described by using the following embodiments.

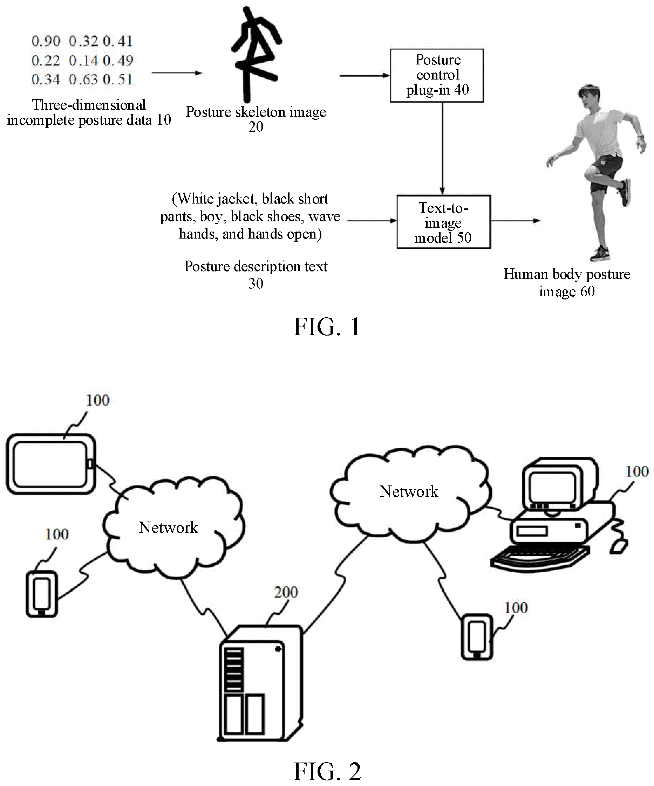

An embodiment of the present disclosure provides a schematic diagram of a posture data completion method for a three-dimensional object. As shown in FIG. 1, the method may be performed by a computer device, and the computer device may be a terminal or a server.

An example in which the three-dimensional object is a human body is used. The computer device obtains three-dimensional incomplete posture data 10 and a posture description text 30 that correspond to the three-dimensional object. The computer device maps the three-dimensional incomplete posture data 10 to a two-dimensional plane to obtain a posture skeleton image 20. The computer device generates, according to the posture description text 30 and the posture skeleton image 20, a human body posture image 60 having a human body torso posture and a hand posture, where the human body posture image 60 is a two-dimensional posture image.

The three-dimensional incomplete posture data 10 is data configured for describing postures of some limbs (including torso and the four limbs but not including a hand) of the three-dimensional object. Alternatively, the three-dimensional incomplete posture data 10 is a parameter matrix configured for describing the human body torso posture of the three-dimensional object. Alternatively, the three-dimensional incomplete posture data 10 is human body posture data without limb postures. The limb postures include at least one of a hand posture, a foot posture, a finger posture, and a toe posture, but are not limited thereto.

In some embodiments, the three-dimensional incomplete posture data 10 includes at least one of data for describing a chest posture, data for describing an arm posture, and data for describing a leg posture, but is not limited thereto.

The posture description text 30 includes a descriptor that describes a preset posture of the three-dimensional object. Alternatively, the posture description text 30 is a descriptor configured for describing a torso posture and a limb posture. For example, the posture description text 30 is white jacket, black short pants, boy, black shoes, wave hands, and hands open.

For example, for a three-dimensional object without limb postures, three-dimensional incomplete posture data 10 corresponding to the three-dimensional object is obtained, and the three-dimensional incomplete posture data 10 is mapped to a two-dimensional plane to obtain a posture skeleton image 20, where the posture skeleton image 20 includes a posture skeleton image. The computer device performs encoding on the posture skeleton image 20 through a posture control plug-in 40, and inputs a skeleton feature vector obtained through encoding as an intermediate vector and a descriptor feature vector corresponding to the posture description text 30 into a text-to-image model 50 to generate an image, so as to obtain the human body posture image 60. In this process, the text-to-image model 50 generates the human body posture image based on the posture description text 30, and in a process of generating the human body posture image, the text-to-image model 50 uses the posture skeleton image 20 as a constraint. That is, a torso posture in the generated human body posture image is the same as a torso posture corresponding to the three-dimensional incomplete posture data 10.

For example, the torso posture of the three-dimensional object described in the three-dimensional incomplete posture data 10 is a kick posture, and the posture description text 30 is white jacket, black short pants, boy, black shoes, wave hands, and hands open. To cause missing joint points in the human body posture image to better match some joint points to prevent a posture of the generated object in the generated human body posture image from being uncontrolled, the torso posture (that is, the posture skeleton image) corresponding to the three-dimensional incomplete posture data 10 is used as a constraint in this embodiment of the present disclosure, and the torso posture corresponding to the three-dimensional incomplete posture data 10 is generated according to both the posture description text 30 and the three-dimensional incomplete posture data 10 as a basic human body posture, thereby completing the limb postures.

Based on the above, according to the method provided in this embodiment, three-dimensional incomplete posture data and a posture description text that correspond to a three-dimensional object are obtained; the three-dimensional incomplete posture data is mapped to a two-dimensional plane to obtain a posture skeleton image; and a human body posture image having a human body torso posture and a limb posture is generated according to the posture description text and the posture skeleton image. In the present disclosure, in a case of facing a three-dimensional object without limb postures, the limb postures of the three-dimensional object are completed by using the posture description text based on the torso posture corresponding to the three-dimensional incomplete posture data, thereby improving posture data completion efficiency of the three-dimensional object, and improving utilization of open-source three-dimensional incomplete posture data without limb postures.

FIG. 2 is a schematic architectural diagram of a computer system according to an embodiment of the present disclosure. The computer system may include a terminal 100 and a server 200.

The terminal 100 may be an electronic device terminal like a mobile phone, a tablet computer, a vehicle-mounted terminal (in-vehicle infotainment), a wearable device, a personal computer (PC), a smart voice interaction device, a smart home appliance, an in-vehicle terminal, an aerial vehicle, or a self-service vending terminal. A client running a target application program may be installed in the terminal 100. The target application program may be an application program that that supports three-dimensional object display or another application program that supports three-dimensional object modeling, three-dimensional object rendering, or three-dimensional object storage, which is not limited in the present disclosure. In addition, in the present disclosure, a form of the target application program is not limited, and includes, but is not limited to, an application program (App), a mini program, or the like installed in the terminal 100, or may be in the form of a web page.

The server 200 may be an independent physical server, or may be a server cluster including a plurality of physical servers or a distributed system, or may be a cloud server that provides basic cloud computing services such as a cloud server that provides a cloud computing service, a cloud database, cloud computing, a cloud function, cloud storage, a network service, cloud communication, a middleware service, a domain name service, a security service, a content delivery network (CDN), and big data. The server 200 may be a backend server of the target application program, and is configured to provide a backend service for the client of the target application program.

The terminal 100 and the server 200 may communicate with each other by using a network, for example, a wired or wireless network.

In a posture data completion method for a three-dimensional object provided in the embodiments of the present disclosure, operations may be performed by a computer device, and the computer device is an electronic device having data computing, processing, and storage capabilities. Using the solution implementation environment shown in FIG. 2 as an example, the terminal 100 may perform the posture data completion method for a three-dimensional object (for example, the client running the target application program and installed in the terminal 100 performs the posture data completion method for a three-dimensional object), or the server 200 may perform the posture data completion method for a three-dimensional object, or the terminal 100 and the server 200 interact and cooperate with each other to perform the method, which is not limited in the present disclosure.

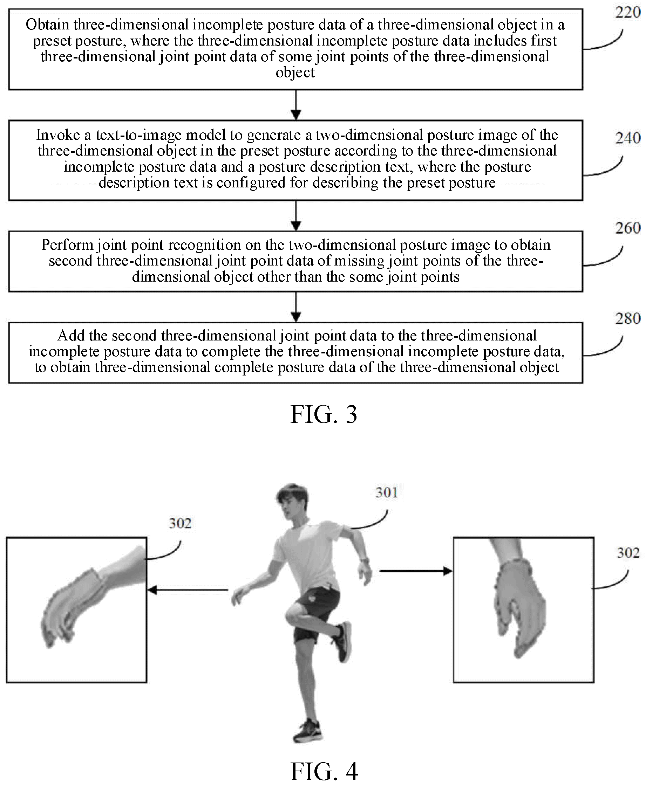

FIG. 3 is a flowchart of a posture data completion method for a three-dimensional object according to an embodiment of the present disclosure. The method may be performed by a computer device, and the computer device may be the terminal 100 or the server 200 in FIG. 2. The method includes the following steps.

**Step 220:** Obtain three-dimensional incomplete posture data of a three-dimensional object in a preset posture, where the three-dimensional incomplete posture data includes first three-dimensional joint point data of some joint points of the three-dimensional object.

The three-dimensional object is a three-dimensional model of a virtual object, and the virtual object may include at least one of the following: a human body, a personified creature, an animal, a plant, and a virtual creature. In some embodiments, the virtual object may alternatively include at least one of a building, a vehicle, an item, and topography.

The three-dimensional object is formed by at least two joint points (or may be referred to as key points). For example, when the three-dimensional object is a human body, the three-dimensional model includes joint points of the human body. For another example, when the three-dimensional object is a building, the three-dimensional model includes key points of the building.

The joint points of the three-dimensional object are nodes on which operations such as rotation or movement may be performed in the three-dimensional model. The nodes are usually located at joints of the three-dimensional model, for example, a shoulder, an elbow, a hip, and the like of the human body. The three-dimensional object may be flexibly transformed by using the joint points for applications such as animation production and game design. In three-dimensional modeling software, the joint points usually may be calculated and determined through a series of geometric operations and algorithms, so that the three-dimensional object can keep a natural, smooth, and consecutive movement track in a movement process.

When the three-dimensional object is a human body, the three-dimensional object may include at least one of the following several types of joint points: a head joint point, a neck joint point, left and right shoulder joint points, a backbone joint point, a waist joint point, left and right elbow joint points, left and right wrist joint points, left and right finger joint points, left and right hip joint points, left and right knee joint points, left and right ankle joint points, and left and right foot joint points. Each type of joint points may include at least one joint point.

Posture data of the three-dimensional object in the preset posture includes joint point data of the three-dimensional object. One frame of posture data of the three-dimensional object includes at least one piece of the following joint point data: three-dimensional location coordinates of each joint point, a joint rotation angle of each joint point, and a joint point connection relationship of joint points. The preset posture may be a known value, so that a posture description text accurately indicating the preset posture is inputted, thereby further ensuring that a complete two-dimensional posture image in the preset posture is accurately generated.

In some embodiments, the posture data of the three-dimensional object may be directly obtained from model data of the three-dimensional model. For example, the model data of the three-dimensional model includes: posture data (joint point data), vertex information (coordinates, a normal vector, and the like), patch information, topology information (a connection relationship between patches, a relationship between bones and meshes, and the like), texture data, material data, bone animation data, model notes, attribute information, and the like.

In some embodiments, if the model data of the three-dimensional model does not include the posture data (joint point data), the computer device may obtain the posture data according to the model data of the three-dimensional model. For example, the computer device renders the three-dimensional model, recognizes a rendering result, and extracts joint point data of each joint point, to obtain the posture data.

The three-dimensional incomplete posture data is posture data in which joint point data of at least one joint point is missed, that is, posture data including joint point data of some joint points. Three-dimensional joint point data of a joint point may include a plurality of pieces of data. Missing the three-dimensional joint point data of a joint point may be that the three-dimensional joint point data related to the joint point does not exist, or the three-dimensional joint point data of the joint point exists but the three-dimensional joint point data of the joint point is incomplete, which is not limited in the embodiments of the present disclosure. For example, complete posture data is to include the three-dimensional joint point data of 24 joint points, and the three-dimensional incomplete posture data may only include the joint point data of 20 joint points. The joint points missed in the three-dimensional incomplete posture data may be the same type of joint points or may include at least two types of joint points. For example, hand (wrist and/or finger) joint points are missed in the three-dimensional incomplete posture data.

In some embodiments, joint points that are already included in the three-dimensional incomplete posture data and that have complete joint point data may be referred to as some joint points; and joint points that are missed or joint points with incomplete joint point data in the three-dimensional incomplete posture data may be referred to as missing joint points, namely, the missing joint points are joint points of the three-dimensional object other than the some joint points.

For example, the missing joint points include at least one hand joint point. Alternatively, the missing joint points include at least one foot joint point. Alternatively, the missing joint points include at least one elbow joint point.

In some embodiments, the some joint points include at least two joint points that can indicate a posture rough contour of the three-dimensional object. The missing joint points include at least one joint point configured for refining posture details of the three-dimensional object.

In an embodiment, the some joint points include a torso joint point, and the missing joint points include a limb joint point. The torso joint point includes at least one of a head joint point, a neck joint point, a chest joint point, a waist joint point, and a four limb joint point. The limb joint point includes at least one of a hand joint point, a wrist joint point, a finger joint point, a foot joint point, an ankle joint point, and a toe joint point.

In some embodiments, the three-dimensional incomplete posture data may alternatively include all joint points but the joint point data of one or some joint points is missed. For example, the three-dimensional incomplete posture data includes a joint rotation angle of the hand joint point but three-dimensional location coordinates of the hand joint point are missed.

The joint point data may also be referred to as three-dimensional joint point data, and the three-dimensional joint point data includes at least one of the following data: three-dimensional coordinates of a joint point, a rotation angle of a joint point, a joint point connection relationship, a joint point name, and a joint point identifier.

**Step 240:** Invoke a text-to-image model to generate a two-dimensional posture image of the three-dimensional object in the preset posture according to the three-dimensional incomplete posture data and a posture description text, where the posture description text is configured for describing the preset posture.

The text-to-image model may also be referred to as a generating image from text model, and is a neural network model that can generate a two-dimensional image according to an inputted text.

The text-to-image model is a multi-modal deep learning model, and may generate, according to the description text, a two-dimensional image matching the description text. A core principle of the model is to convert a natural language text into an image space and associates visual features with voice information, to implement mapping between natural language texts and images. A specific operation process of the text-to-image model is as follows: encoding text description into a feature vector; and synthesizing an image corresponding to the feature vector by using a generator network. The text-to-image model may be used for various applications, for example, generating a real product image for an electronic commerce website, creating a visual aid tool for the disabled people, generating an image for virtual and augmented reality application programs, and manufacturing a verification code picture material. In addition, the text-to-image model further includes a plurality of types, for example, a generative adversarial network (GAN)-based text-to-image model and a stable diffusion (SD) text-to-image model. These models all perform training by using a large number of data sets of description texts and corresponding two-dimensional images that are paired, and have a capability of generating a two-dimensional image according to a new description text after the training is completed.

For example, the text-to-image model may be an SD model, and the SD model is an image generation model based on a diffusion process, which can generate a high-quality and high-resolution image. The SD model gradually performs denoising on a noise image (random noise matrix) by simulating a diffusion process to obtain a target image. The model has strong stability and controllability, and may generate an image having diversified effects and a good visual effect.

In some embodiments, the text-to-image model may generate a two-dimensional posture image based on the posture description text and the three-dimensional incomplete posture data, where the two-dimensional posture image is generated according to the posture description text, the two-dimensional posture image may include a generated object, the generated object presents a preset posture indicated by the posture description text, and the posture presented by the generated object also matches the preset posture in the three-dimensional incomplete posture data. The generated object may be an object of the same type as the three-dimensional object, or the generated object may be the same as the three-dimensional object. The generated object is generated according to the posture description text, and a closer description to the three-dimensional object in the posture description text indicates a higher similarity between the generated object and the three-dimensional object.

The text-to-image model generates the two-dimensional posture image based on the posture description text and constrains the two-dimensional posture image by using the posture indicated in the three-dimensional incomplete posture data in a generation process, so that the posture of the generated object in the two-dimensional posture image is close to the preset posture in the three-dimensional incomplete posture data.

The posture description text includes at least one descriptor configured for describing a posture of the three-dimensional object. The posture description text is configured for describing the preset posture presented by the three-dimensional object in the three-dimensional incomplete posture data. In Step 220, the three-dimensional incomplete posture data is one frame of posture data, or the three-dimensional incomplete posture data is one frame of posture data in a posture sequence of a coherent action of the three-dimensional object. The posture description text may further include at least one descriptor configured for describing the coherent action.

For example, the descriptor in the posture description text may include at least one of the following: an action descriptor, a movement descriptor, a limb state descriptor, a movement speed descriptor, a movement style descriptor, an action objective descriptor, and the like.

In addition, to make the generated object to be close to the three-dimensional object, the posture description text may further include at least one descriptor for the three-dimensional object. For example, the posture description text includes an appearance descriptor, a dressing descriptor, a gender descriptor, an age descriptor, a personality descriptor, and the like of the three-dimensional object.

An order of the descriptors in the posture description text is also very important since the order affects a weight of a generated image. Generally, a descriptor with a more front location has a greater weight, and a descriptor with a more rear location has a smaller weight.

For example, the posture description text includes a positive descriptor and a negative descriptor, where the positive descriptor includes a positive requirement text of the two-dimensional posture image, and the positive descriptor includes the preset posture; and the negative descriptor includes at least one descriptor configured for describing an image defect, and the negative descriptor is configured for guiding the text-to-image model to avoid generating a defect image having the image defect.

For example, the negative descriptor (an excluded word) is configured for describing content that is not expected to appear in the two-dimensional posture image, for example, low quality, watermark, skin blemishes, and the like.

For example, the positive descriptor may be: masterpiece, best quality, ultra-detailed, best shadow, high definition, high resolution, best details, 1 boy, perfect hand, white T-shirt, black short pants, black shoes, short black hair, simple background, white background, a man kicks something or someone with his left leg.

The negative descriptor may be: worst quality:2, low quality:2, normal quality:2, lower quality, normal quality, monochrome:1.2, grayscale:1.2, skin spots, acnes, skin blemishes, the number of fingers does not conform to common sense, the number of limbs does not conform to common sense, joint distortion, the number of organs does not conform to common sense, skin damage, body fat percentage does not conform to common sense, not suitable for browsing during working hours, hair ornaments, selfie, bad anatomy, text, error, redundant numbers, fewer numbers, cropped, worst quality, low quality, normal quality, jpeg artifacts, signature, watermark, username, blurry.

In the embodiments of the present disclosure, the posture description text includes the positive descriptor and the negative descriptor, so that the text-to-image model may generate, according to the positive descriptor, the two-dimensional posture image reflecting the preset posture and avoid, according to the negative descriptor, content that is not expected to appear in the two-dimensional posture image, thereby ensuring that the generated two-dimensional posture image better conforms to a requirement.

**Step 260:** Perform joint point recognition on the two-dimensional posture image to obtain second three-dimensional joint point data of missing joint points of the three-dimensional object other than the some joint points.

In some embodiments, all joint points of the three-dimensional object may be recognized from the two-dimensional posture image by using a joint point recognition algorithm of the three-dimensional object; and the missing joint points are found from all the joint points obtained through recognition.

The joint point recognition algorithm may obtain three-dimensional joint point data of each joint point through recognition according to the two-dimensional posture image. The joint point recognition algorithm is a neural network model that is specially trained to recognize joint points from a two-dimensional image, and the joint point recognition algorithm learns a location relationship and a connection relationship of joint points in a training process, recognizes the joint points from the inputted two-dimensional image according to inherent association between the joint points, and outputs the three-dimensional joint point data of the joint points.

For joint point recognition on a single part, a dedicated joint point recognition algorithm may be trained. For example, a hand joint point recognition algorithm (a hand posture estimation algorithm) may be trained for a recognition task on a hand joint point.

In some embodiments, when the missing joint points of the three-dimensional object focus on a part, a target region in which a target part is located in the two-dimensional posture image may be first recognized, the target region in the two-dimensional posture image is captured as a target image, and the missing joint points are recognized by using a joint point recognition algorithm for the target part.

For example, when the missing joint points are hand joint points, hand joint point recognition may be performed on the two-dimensional posture image by using an attention collaboration-based regressor (ACR) hand posture estimation algorithm, to obtain joint point data of the missing hand joint points.

Since the text-to-image model may generate, based on the posture description text, an image (two-dimensional posture image) having the posture and may constrain the posture in the two-dimensional posture image by using the three-dimensional incomplete posture data, the text-to-image model generates a two-dimensional posture image that is closer to the preset posture.

The generated object in the generated two-dimensional posture image presents a complete posture, so that when joint point extraction is performed on the two-dimensional posture image, complete joint point distribution of the three-dimensional object in the preset posture may be extracted. Therefore, the second three-dimensional joint point data may be recognized and extracted based on the two-dimensional posture image, and data completion is performed on the three-dimensional incomplete posture data by using the second three-dimensional joint point data obtained through recognition.

Using an example in which the three-dimensional object is a human body and the missing joint points are hand joint points, as shown in FIG. 4, the two-dimensional posture image 301 includes a complete posture of the human body, and three-dimensional joint point data of the hand joint points may be obtained by performing hand posture estimation on a hand 302 of the human body in the two-dimensional posture image 301.

**Step 280:** Combine the second three-dimensional joint point data and the three-dimensional incomplete posture data to complete the three-dimensional incomplete posture data, to obtain three-dimensional complete posture data of the three-dimensional object.

For example, the three-dimensional incomplete posture data may be completed by filling the second three-dimensional joint point data obtained through recognition in the three-dimensional incomplete posture data, to obtain the three-dimensional complete posture data. If the missing joint points are joint points that are completely not included in the three-dimensional incomplete posture data, matching may be directly performed between the missing joint points and the some joint points when the second three-dimensional joint point data is added to the three-dimensional incomplete posture data, to add the second three-dimensional joint point data to a suitable location in the three-dimensional incomplete posture data, so as to complete the three-dimensional incomplete posture data. If a missing joint point in the missing joint points is a joint point included in the three-dimensional incomplete posture data but joint point data of the missing joint point is incomplete, matching needs to be performed on the missing joint points and the some joint points when the second three-dimensional joint point data is added to the three-dimensional incomplete posture data, to add the second three-dimensional joint point data to a suitable location in the three-dimensional incomplete posture data, and since a part of the joint point data of the missing joint point exists in the three-dimensional incomplete posture data, deduplication further needs to be performed during addition to avoid occurrence of repeated joint point data.

The three-dimensional complete posture data includes the three-dimensional joint point data of all the joint points of the three-dimensional object. That is, the three-dimensional complete posture data includes the first three-dimensional joint point data of the three-dimensional object and the part of the joint point data of the missing joint point.

Based on the above, according to the method provided in this embodiment, three-dimensional incomplete posture data of a three-dimensional object in a preset posture and a posture description text are obtained, where the three-dimensional incomplete posture data includes first three-dimensional joint point data of some joint points of the three-dimensional object, and the posture description text is configured for describing the preset posture. The three-dimensional incomplete posture data and the posture description text are then inputted into a text-to-image model, since the text-to-image model has a feature of controlling accurate generation of an image according to a text, the text-to-image model can generate a two-dimensional posture image of the three-dimensional object in the preset posture according to the three-dimensional incomplete posture data and the posture description text, where a generated object in the two-dimensional posture image has a complete preset posture, so that postures of missing joint points can be embodied. In this way, by performing recognition and extraction on joint points of the generated object in the two-dimensional posture image, second three-dimensional joint point data of the missing joint points can be obtained, and by combining the second three-dimensional joint point data and the three-dimensional incomplete posture data, the three-dimensional incomplete posture data can be completed to obtain three-dimensional complete posture data of the three-dimensional object, that is, complete posture data. In the present disclosure, for a three-dimensional object that does not have postures of missing joint points, a two-dimensional posture image having a complete preset posture can be directly generated by using a text-to-image model based on posture data of some joint points in three-dimensional incomplete posture data and a posture description text, and a posture of the three-dimensional object can be completed by using second three-dimensional joint point data extracted from the two-dimensional posture image without additionally collecting the postures of the missing joint points to construct an action library, thereby greatly reducing consumption of manpower and material resources, improving posture data completion efficiency of the three-dimensional object, and improving utilization of open-source three-dimensional posture data without limb postures. In addition, the posture data completed by using this method can perfectly match original incomplete posture data of the three-dimensional object, thereby improving a posture data completion effect of the three-dimensional object.

The following provides an embodiment of using a text-to-image model having a posture control plug-in to generate a two-dimensional posture image.

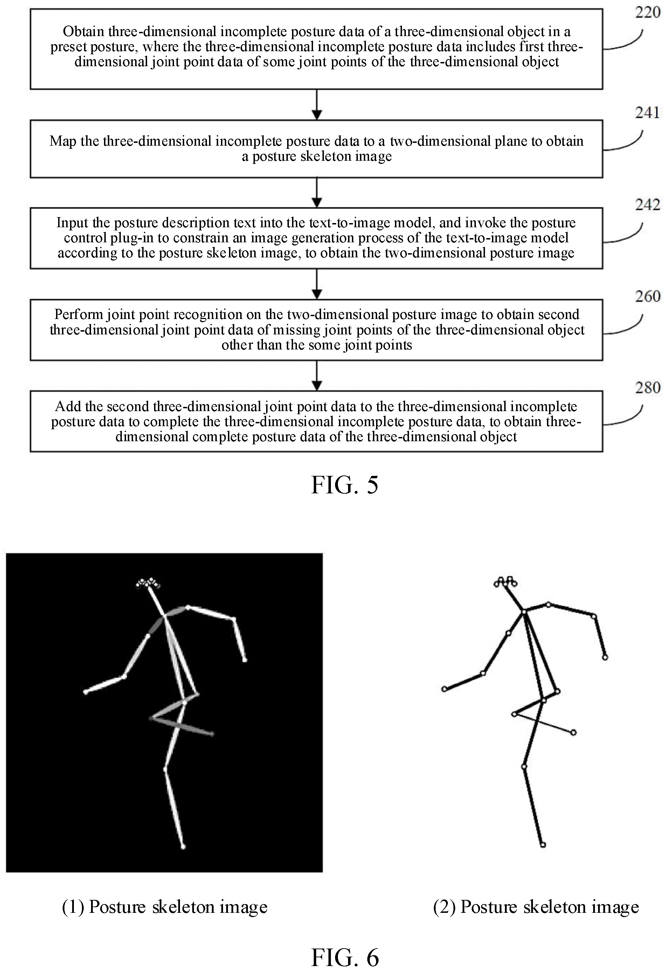

FIG. 5 is a flowchart of a posture data completion method for a three-dimensional object according to an embodiment of the present disclosure. The method may be performed by a computer device, and the computer device may be the terminal 100 or the server 200 in FIG. 2. Based on the embodiment shown in FIG. 3, Step 240 includes Step 241 and Step 242.

**Step 220:** Obtain three-dimensional incomplete posture data of a three-dimensional object in a preset posture, where the three-dimensional incomplete posture data includes first three-dimensional joint point data of some joint points of the three-dimensional object.

For example, the three-dimensional object is a human body, so that three-dimensional incomplete posture data of the human body may be obtained, where the three-dimensional incomplete posture data includes first three-dimensional joint point data of the human body, and the some joint points include joint points of a head, a torso, and the four limbs of the human body. Second three-dimensional joint point data of the three-dimensional human body is missed in the three-dimensional incomplete posture data, and missing joint points include hand joint points of the human body.

**Step 241:** Map the three-dimensional incomplete posture data to a two-dimensional plane to obtain a posture skeleton image.

The posture skeleton image is a two-dimensional image, and locations of the some joint points and a connection relationship of the some joint points are marked in the posture skeleton image.

In some embodiments, the posture skeleton image may be drawn according to bone and joint colors specified in an OpenPose algorithm. As shown in FIG. 6(1), in the posture skeleton image, locations at which joint points are located are marked by using dots in different colors, and the dots in different colors represent different joint points. The joint points are connected by using line segments in different colors, and the line segments in different colors are configured for indicating different parts of the human body. More clearly, as shown in FIG. 6(2), the posture skeleton image may intuitively indicate the locations and the connection relationship of the joint points.

In some embodiments, the two-dimensional plane may be a two-dimensional imaging plane of a virtual camera, and the computer device maps, according to a parameter of the virtual camera, the three-dimensional incomplete posture data to the two-dimensional imaging plane of the virtual camera to obtain a joint point image, where the joint point image includes two-dimensional joint point coordinates of at least two joint points of the some joint points; and connects the two-dimensional joint point coordinates of the at least two joint points of the some joint points in the joint point image according to a joint point connection relationship of the at least two joint points of the some joint points to obtain the posture skeleton image.

The parameter of the virtual camera includes at least one of coordinates of the virtual camera, a location of the virtual camera relative to the three-dimensional object, and a built-in parameter of the virtual camera.

For example, the following parameters of the virtual camera may be used: a resolution is 512*512, a focal length is 50 mm, a sensor size is 36 mm, a distance to a root node of the three-dimensional object is 8 m, flush with a waist root node, a photographing direction being perpendicular to a torso plane of the three-dimensional object (the torso plane may be a plane determined according to two shoulder joint points and the waist root node).

In this embodiment of the present disclosure, the three-dimensional incomplete posture data is projected onto the two-dimensional imaging plane of the virtual camera to obtain the posture skeleton image, and since the setting of the virtual camera can simulate a photographing process of a real camera, by projecting the three-dimensional incomplete posture data onto the two-dimensional imaging plane of the virtual camera, an accurate joint point image can be obtained, and a more accurate posture skeleton image can be further obtained, thereby improving generation accuracy of the two-dimensional posture image.

**Step 242:** Input the posture description text into the text-to-image model, and invoke the posture control plug-in to constrain an image generation process of the text-to-image model according to the posture skeleton image, to obtain the two-dimensional posture image.

Postures of the some joint points in the two-dimensional posture image are consistent with the posture skeleton image.

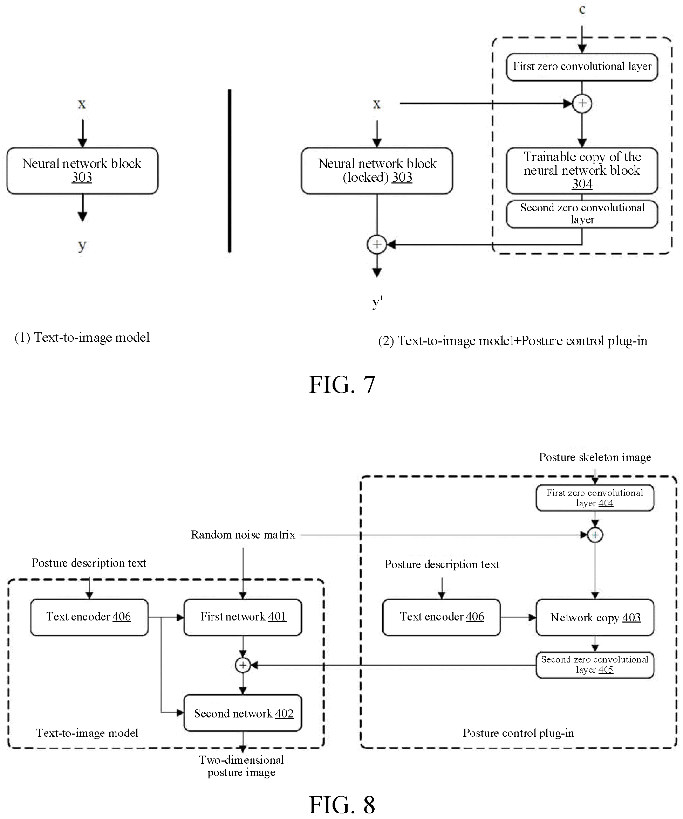

For example, the text-to-image model includes the posture control plug-in, and the posture control plug-in is configured to constrain, according to the posture skeleton image, the two-dimensional posture image generated by the text-to-image model; and
The posture control plug-in uses the principle shown in FIG. 7 to constrain the image generation process of the text-to-image model. FIG. 7(1) shows a neural network block 303 of a text-to-image model, where an input of the neural network block 303 is x and an output is y. When the posture control plug-in is used to constrain the generation process, as shown in FIG. 7(2), a network of the posture control plug-in includes a trainable copy 304 and two zero convolutional layers of the neural network block. The trainable copy 304 of the neural network block is obtained by directly copying the neural network block 303 of the text-to-image model. In an application process, a constraint condition c (the posture skeleton image) is inputted into the first zero convolutional layer, an output of the first zero convolutional layer and the input x are added, an addition result is inputted into the trainable copy 304, an output of the trainable copy 304 is then inputted into the second zero convolutional layer, and an output of the second zero convolutional layer and the original output y of the neural network block 303 are added, to obtain a final output y'. In this way, the posture control plug-in may be enabled to constrain the image generation process of the text-to-image model, and the constraint condition c may constrain output data of the text-to-image model.

During training of the posture control plug-in, a network parameter (a fixed parameter does not participate in parameter adjustment in a training process) in the neural network block 303 in the text-to-image model may be locked, and network parameters in the two zero convolutional layers and the trainable copy in the posture control plug-in are then adjusted by using a training sample, so that the text-to-image model may output a target output of the training sample under the constraint of the posture control plug-in. When initialization is performed on the posture control plug-in, the network parameters in the two zero convolutional layers are set to 0, and an initial parameter of the trainable copy 304 is the same as that of the neural network block 303.

In an embodiment, as shown in FIG. 8, the text-to-image model includes a first network 401 and a second network 402; and the posture control plug-in includes a first zero convolutional layer 404, a network copy 403 of the first network, and a second zero convolutional layer 405, where the network copy 403 is a network obtained through initialization and training by using a network structure and a network parameter of the first network 401, namely, the network copy 403 and the first network 401 have the same network structure but do not necessarily have the same network parameter. Step 242 may include the following steps:
1) Input the posture description text into the first network 401 to obtain a text feature. In some embodiments, the posture description text is inputted into a text encoder 406 to obtain a text encoding result, and the text encoding result is inputted into the first network 401 to obtain the text feature.
2) Input the posture skeleton image into the first zero convolutional layer 404 to obtain a posture convolution result.
3) Add the posture convolution result to a random noise matrix to obtain a constraint noise matrix, where the random noise matrix is a random matrix that conforms to Gaussian distribution. The text-to-image model performs denoising on the random noise matrix according to the inputted posture description text to obtain the final two-dimensional posture image.
4) Input the constraint noise matrix and the posture skeleton image into the network copy 403 to obtain a first constraint feature.
5) Input the first constraint feature into the second zero convolutional layer 405 to obtain a second constraint feature.
6) Add the second constraint feature to the text feature to obtain a text constraint feature.
7) Input the text constraint feature and the posture description text into the second network 402 to obtain the two-dimensional posture image. In some embodiments, the text constraint feature and the text encoding result are inputted into the second network to obtain the two-dimensional posture image.

In this embodiment of the present disclosure, the second constraint feature is generated based on the posture skeleton image by using a multi-layer structure of the posture control plug-in, and is further combined with the text feature of the posture description text as the text constraint feature, to control, by using the text constraint feature, the posture of the generated object in the two-dimensional posture image to be consistent with the posture skeleton image, so that a constraint effect is ensured, and the missing joint points obtained through recognition can better match the some joint points, thereby improving posture data completion efficiency and a posture data completion effect of the three-dimensional object.

For example, the first network includes at least one encoder; and the second network includes at least one decoder.

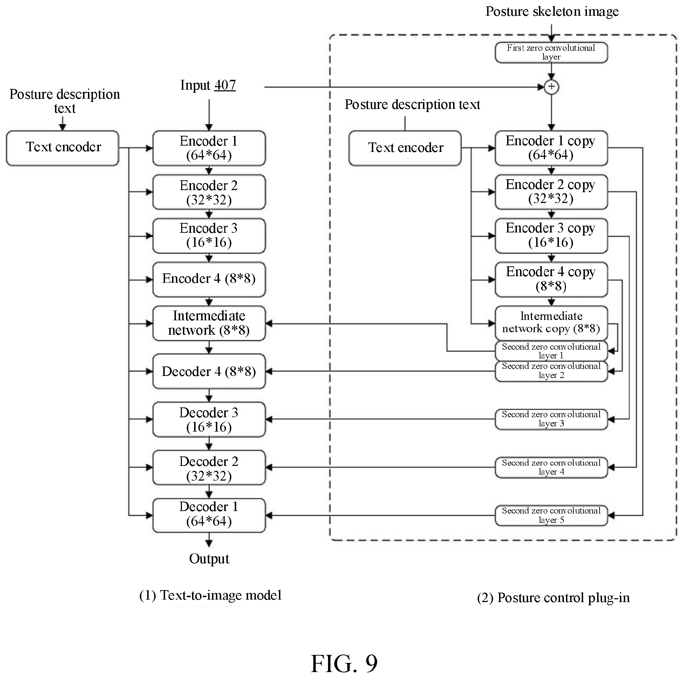

In an embodiment, as shown in FIG. 9, the text-to-image model may be an SD model, and the posture control plug-in may use an OpenPose mode in a Control Net plug-in in the SD model. That is, the text-to-image model includes a text encoder, an encoder 1, an encoder 2, an encoder 3, an encoder 4, an intermediate network, a decoder 4, a decoder 3, a decoder 2, and a decoder 1. The posture control plug-in includes a first zero convolutional layer, an encoder 1 copy, an encoder 2 copy, an encoder 3 copy, an encoder 4 copy, an intermediate network copy, a second zero convolutional layer 1, a second zero convolutional layer 2, a second zero convolutional layer 3, a second zero convolutional layer 4, and a second zero convolutional layer 5.

A process of obtaining the two-dimensional posture image by using the text-to-image model and the posture control plug-in is as follows:
(1) Input the posture description text into the text encoder to obtain a text encoding result. The text encoding result and the random noise matrix are then inputted into the encoder 1, the text encoding result and an output of the encoder 1 are inputted into the encoder 2, the text encoding result and an output of the encoder 2 are inputted into the encoder 3, and the text encoding result and an output of the encoder 3 are inputted into the encoder 4. The random noise matrix may be 64*64-dimensional data, the output of the encoder 1 may be 32*32-dimensional data, the output of the encoder 2 may be 16*16-dimensional data, the output of the encoder 3 may be 8*8-dimensional data, and the output of the encoder 4 may be 8*8-dimensional data.
(2) Input the posture skeleton image into the first zero convolutional layer. An output result of the first zero convolutional layer is added to the random noise matrix. An addition result and the text encoding result are inputted into the encoder 1 copy, the text encoding result and an output of the encoder 1 copy are inputted into the encoder 2 copy, the text encoding result and an output of the encoder 2 copy are inputted into the encoder 3 copy, the text encoding result and an output of the encoder 3 copy are inputted into the encoder 4 copy, and the text encoding result and an output of the encoder 4 copy are inputted into the intermediate network copy.
(3) Input an output of the intermediate network copy into the second zero convolutional layer 1. The text encoding result and the output of the encoder 4 are inputted into the intermediate network. An output of the second zero convolutional layer 1 is added to an output of at least one network block in the intermediate network (referring to the process shown in FIG. 7), so that the intermediate network obtains an output of the intermediate network according to an addition result.
(4) Input the output of the encoder 4 copy into the second zero convolutional layer 2. The text encoding result and the output of the intermediate network are inputted into the decoder 4. An output of the second zero convolutional layer 2 is added to an output of at least one network block in the decoder 4 (referring to the process shown in FIG. 7), so that the decoder 4 obtains an output of the decoder 4 according to an addition result.
(5) Input the output of the encoder 3 copy into the second zero convolutional layer 3. The text encoding result and the output of the decoder 4 are inputted into the decoder 3. An output of the second zero convolutional layer 3 is added to an output of at least one network block in the decoder 3 (referring to the process shown in FIG. 7), so that the decoder 3 obtains an output of the decoder 3 according to an addition result.
(6) Input the output of the encoder 2 copy into the second zero convolutional layer 4. The text encoding result and the output of the decoder 3 are inputted into the decoder 2. An output of the second zero convolutional layer 4 is added to an output of at least one network block in the decoder 2 (referring to the process shown in FIG. 7), so that the decoder 2 obtains an output of the decoder 2 according to an addition result.
(7) Input the output of the encoder 1 copy into the second zero convolutional layer 5. The text encoding result and the output of the decoder 2 are inputted into the decoder 1. An output of the second zero convolutional layer 5 is added to an output of at least one network block in the decoder 1 (referring to the process shown in FIG. 7), so that the decoder 1 obtains an output of the decoder 1 according to an addition result.

In some embodiments, an output result of the decoder 1 may be used as an input 407 (replacing the random noise matrix in the foregoing process) to iteratively and repeatedly perform the foregoing process from (1) to (7) until a number of iterations meets a number-of-times threshold, and the last time of output of the decoder 1 is used as the two-dimensional posture image finally outputted by the text-to-image model.

In this embodiment of the present disclosure, the first network is set to include at least one encoder and the second network is set to include at least one decoder, so that when the posture control plug-in is used to constrain the image generation process of the text-to-image model, a dimension of data may be reduced by using the encoder, where the encoder can remove redundant information and keep key features to improve a speed and accuracy of subsequent processing, and a structure and details of the inputted data can be accurately captured and reconstructed by using the decoder to ensure accuracy of outputted data, thereby improving data processing efficiency and accuracy in the whole process and enhancing a generalization capability of the network.

**Step 260:** Perform joint point recognition on the two-dimensional posture image to obtain second three-dimensional joint point data of missing joint points of the three-dimensional object other than the some joint points.

**Step 280:** Combine the second three-dimensional joint point data and the three-dimensional incomplete posture data to obtain three-dimensional complete posture data of the three-dimensional object.

Based on the above, according to the method provided in this embodiment, the image generation process of the text-to-image model is constrained by using the posture control plug-in, so that the text-to-image model may generate the two-dimensional posture image based on the constraint of the posture skeleton image and control the posture of the generated object in the two-dimensional posture image to be consistent with the posture skeleton image. The missing joint points obtained through recognition can better match the some joint points, thereby improving posture data completion efficiency and a posture data completion effect of the three-dimensional object, and improving utilization of open-source three-dimensional posture data without limb postures.

For example, the posture of the three-dimensional object may be one frame of posture in a coherent action, and to make front and rear postures in the coherent action of the three-dimensional object smoother, similarity determination may be further performed on a complete posture based on the front and rear frames of postures, and if a similarity is poor, the complete posture may be re-generated.

For example, after postures in the coherent action are completed by using the foregoing method, smoothing processing may be further performed on the postures in the coherent action, to further improve action coherence.

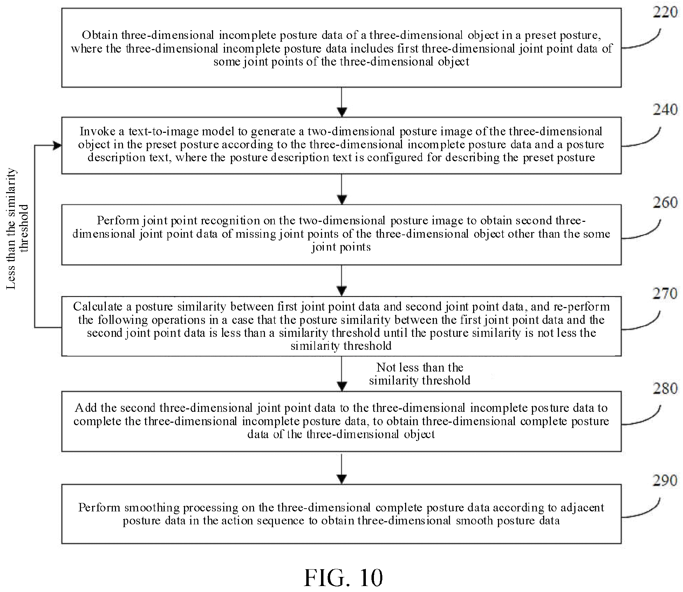

FIG. 10 is a flowchart of a posture data completion method for a three-dimensional object according to an embodiment of the present disclosure. The method may be performed by a computer device, and the computer device may be the terminal 100 or the server 200 in FIG. 2. Based on the embodiment shown in FIG. 3, the method further includes Step 270 after Step 260, and/or the method further includes Step 290 after Step 280.

**Step 220:** Obtain three-dimensional incomplete posture data of a three-dimensional object in a preset posture, where the three-dimensional incomplete posture data includes first three-dimensional joint point data of some joint points of the three-dimensional object.

For example, the three-dimensional incomplete posture data is one frame of posture data in an action sequence of the three-dimensional object, and the action sequence includes at least two frames of posture data. That is, in Step 220, an i^{th} frame of three-dimensional incomplete posture data in the action sequence of the three-dimensional object may be obtained. The action sequence includes n frames of posture data, where i is a positive integer not greater than n, and n is a positive integer.

For example, one group of action sequences of the three-dimensional object are obtained, and the group of action sequences include at least two frames of posture data. Joint points are missed in at least one frame of posture data. Alternatively, joint points are missed in each frame of posture data in the action sequence. In some embodiments, the joint points missed in each frame of posture data may be the same or may be different.

In this embodiment of the present disclosure, a description is provided by using an example in which hand joint points are missed in each frame of posture data in the action sequence. To complete the hand joint points in each frame of posture data in the action sequence, for each frame of posture data in the action sequence, the hand joint points in each frame of posture data may be completed by using the method in the foregoing embodiments.

To make a hand action smoother after the action sequence is completed, smoothing may be performed by using Step 270 and Step 290 provided in this embodiment.

**Step 240:** Invoke a text-to-image model to generate a two-dimensional posture image of the three-dimensional object in the preset posture according to the three-dimensional incomplete posture data and a posture description text, where the posture description text is configured for describing the preset posture.

For the i^{th} frame of three-dimensional incomplete posture data, the text-to-image model is invoked to generate an i^{th} frame of two-dimensional posture image according to the i^{th} frame of three-dimensional incomplete posture data and the posture description text. The posture description text is configured for describing actions in the action sequence. A posture of a generated object in the i^{th} frame of two-dimensional posture image is the same as the preset posture in the i^{th} frame of three-dimensional incomplete posture data.

**Step 260:** Perform joint point recognition on the two-dimensional posture image to obtain second three-dimensional joint point data of missing joint points of the three-dimensional object other than the some joint points.

Joint point recognition is performed on the i^{th} frame of two-dimensional posture image to obtain second three-dimensional joint point data in the i^{th} frame of three-dimensional incomplete posture data.

**Step 270:** Calculate a posture similarity between first joint point data and second joint point data, and re-perform the following steps when the posture similarity between the first joint point data and the second joint point data is less than a similarity threshold until the posture similarity is not less the similarity threshold.

The re-performing the following steps may be re-performing Step 240, Step 260, and Step 270, and Step 280 is performed in a case that the posture similarity between the first joint point data and the second joint point data is not less than the similarity threshold.

The first joint point data includes the second three-dimensional joint point data in the two-dimensional posture image, and the second joint point data includes second three-dimensional joint point data in historical posture data; and the historical posture data includes at least one frame of posture data that is located before the three-dimensional incomplete posture data in the action sequence.

That is, a similarity between an i^{th} frame of missing joint point and an (i-1)^{th} frame of missing joint point is calculated, and when the similarity is high, a next frame (an (i+1)^{th} frame) of missing joint point continues to be generated; and when the similarity is low, the i^{th} frame of missing joint point is re-generated. The i^{th} frame of missing joint point is second three-dimensional joint point data obtained according to the i^{th} frame of three-dimensional incomplete posture data. The (i-1)^{th} frame of missing joint point is second three-dimensional joint point data obtained according to (i-1)^{th} frame of three-dimensional incomplete posture data in the action sequence.

When i is 1, Step 270 of calculating a posture similarity between two adjacent frames may not be performed.

Based on the above, when the three-dimensional incomplete posture data is one frame of posture data in the action sequence of the three-dimensional object, according to the method provided in this embodiment, after each frame of missing joint point is generated, posture similarity matching may be further performed on a current frame of missing joint point according to a previous frame of missing joint point, and if a posture difference between the current frame of missing joint point and the previous frame of missing joint point is excessively great, the current frame of missing joint point is re-generated until the posture difference between the current frame of missing joint point and the previous frame of missing joint point is less than a threshold. In this way, coherent and smooth actions of the missing joint points in the action sequence may be ensured, thereby improving a joint point completion effect. For example, the three-dimensional joint point data includes three-dimensional location coordinates and a joint rotation angle, and the following provides a method for calculating the posture similarity:

obtaining a completion matrix according to the three-dimensional location coordinates of the first joint point data; obtaining a historical matrix according to the three-dimensional location coordinates of the second joint point data; calculating a cosine similarity between the completion matrix and the historical matrix to obtain a first similarity; calculating a difference between the joint rotation angle of the first joint point data and the joint rotation angle of the second joint point data to obtain a second similarity; and performing weighted summation on the first similarity and the second similarity to obtain the posture similarity.

In this embodiment of the present disclosure, calculation is performed in two dimensions of joint point coordinates and a joint point rotation angle, the joint point coordinates directly provide location information of a joint in space, and the joint point rotation angle reflects a relative movement relationship between joints, so that the location information and the relative movement relationship of joint points are comprehensively considered when the posture similarity is calculated, and calculation accuracy of the posture similarity is improved.

In a possible implementation, there are at least two missing joint points, and the second similarity may be calculated according to the following method: calculating the difference between the joint rotation angle of the first joint point data and the joint rotation angle of the second joint point data to obtain a joint rotation angle difference of each missing joint point; and performing weighted summation on at least two joint rotation angle differences according to a weight of each missing joint point in the missing joint points to obtain the second similarity.

In this embodiment of the present disclosure, when there are a plurality of missing joint points, since each missing joint point has a joint rotation angle difference, weighted summation may be performed on the at least two joint rotation angle differences based on the weight of each missing joint point to accurately obtain the second similarity.

The weight of each missing joint point may be preset, and the weight of each missing joint point may be related to importance of the missing joint point. In a possible implementation, the importance of the missing joint point is related to a type of the missing joint point, and the type of the missing joint point may include a parent node and a child node. In some cases, the importance of the parent node is higher than the importance of the child node. Therefore, during weight setting, it may be set that a weight of the parent node is higher than a weight of the child node in the missing joint point. A number of joint points between the parent node and a root node in the three-dimensional object is a first number, a number of joint points between the child node and the root node is a second number, and the first number is less than the second number. That is, in two connected joint points, a joint point that is closer to a layer of the root node is a parent node, and a joint point that is farther from the layer of the root node is a child node. For example, a wrist joint is a parent node of a hand joint.

In this embodiment of the present disclosure, by setting the weight of the parent node to be higher than the weight of the child node, a higher weight is set for an important node in the missing joint point, thereby further improving the calculation accuracy of the second similarity.

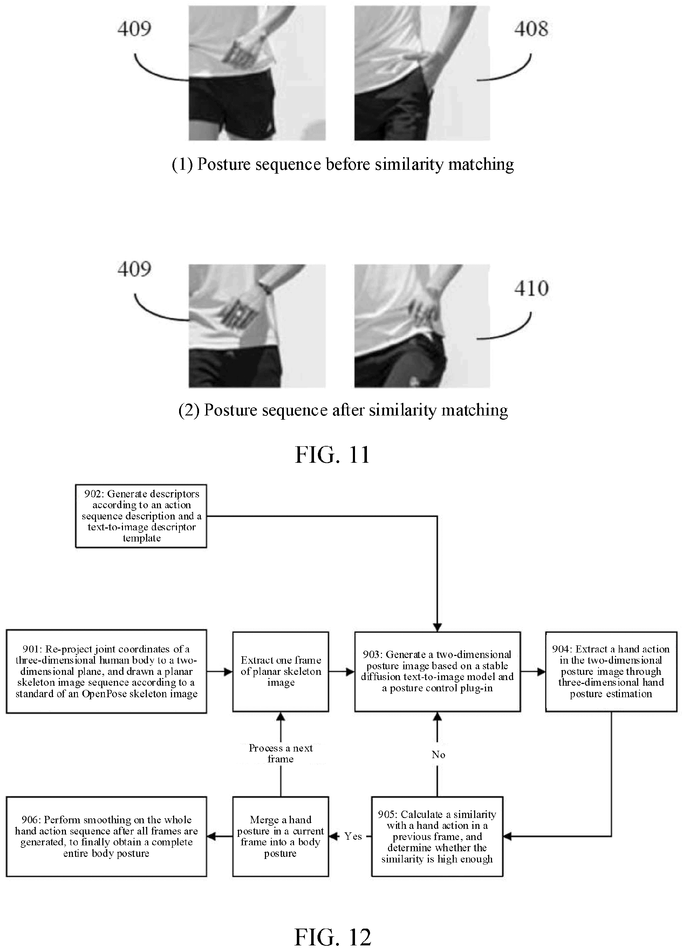

By using the method provided in Step 270, it may be ensured that the posture similarity between two adjacent frames of missing joint points is greater than the similarity threshold, and posture coherence between the two adjacent frames may be ensured. For example, as shown in FIG. 11(1), if a posture difference between a hand posture in a current frame 408 and a hand posture in a previous frame 409 is excessively great, the hand posture in the current frame is re-generated. As shown in FIG. 11(2), a posture difference between the re-generated hand posture 410 and the hand posture in the previous frame 409 is small, and actions are smoother.

**Step 280:** Combine the second three-dimensional joint point data and the three-dimensional incomplete posture data to obtain three-dimensional complete posture data of the three-dimensional object.

In some embodiments, the i^{th} frame of three-dimensional incomplete posture data is completed according to the second three-dimensional joint point data in the i^{th} frame of three-dimensional incomplete posture data to obtain an i^{th} frame of three-dimensional complete posture data.

**Step 290:** Perform smoothing processing on the three-dimensional complete posture data according to adjacent posture data in the action sequence to obtain three-dimensional smooth posture data.

The adjacent posture data includes: at least one frame of posture data located before the three-dimensional incomplete posture data in the action sequence and at least one frame of posture data located after the three-dimensional incomplete posture data in the action sequence; the adjacent posture data includes: at least one frame of posture data located before the three-dimensional incomplete posture data in the action sequence; or the adjacent posture data includes: at least one frame of posture data located after the three-dimensional incomplete posture data in the action sequence.

In some embodiments, data smoothing may be performed on the second three-dimensional joint point data in the action sequence by using a smoothing algorithm to obtain frames of smoothened three-dimensional smooth posture data. For example, the smoothing algorithm may be a moving average smoothing algorithm, an exponential smoothing algorithm, a median filtering smoothing algorithm, a local polynomial smoothing algorithm, and the like.

According to the method provided in this embodiment, after each frame of missing joint point in the action sequence is completed, data smoothing processing may be further performed on the missing joint points in the action sequence by using a smoothing algorithm, so that posture transition of the missing joint points in the whole action sequence becomes smoother, ensuring that an action sequence obtained through completion has a good visual effect.

The following provides an embodiment of completing a hand posture of a three-dimensional human body by using the method provided in the embodiments of the present disclosure.

FIG. 12 is a flowchart of a posture data completion method for a three-dimensional object according to an embodiment of the present disclosure. The method may be performed by a computer device, and the computer device may be the terminal 100 or the server 200 in FIG. 2. The method includes the following steps.

In this embodiment, the hand posture of the human body is mainly completed by using a Stable Diffusion text-to-image framework and an OpenPose mode of a Control Net plug-in.

Stable Diffusion (SD) is a text-to-image framework, which simulates a process in which noise is gradually reduced by using a differentiable diffusion equation to generate a high-quality sample. In addition, a text description feature is introduced in the diffusion denoising process to control a probability distribution of denoising, so as to generate an image related to an inputted text description. However, a constraint force of simply using a text to control a human body image is not strong enough, and it is difficult to obtain a specified human body action image. Therefore, a human body posture of a generated image is further constrained by using the OpenPose mode of the Control Net plug-in in this embodiment. A principle of the Control Net plug-in is to insert a condition control branch in the SD diffusion model to affect the generated image, where the branch can input various forms of condition control images such as a depth map, an edge image, a human body posture image, and a semantic segmentation image, to accurately control the generated image. The OpenPose mode is used herein, that is, a human body posture image is inputted to control the human body posture in the SD text-to-image framework.

Step 901: Joint re-projection of the three-dimensional human body and manufacturing of a planar skeleton image: Re-project joint coordinates of the three-dimensional human body to a two-dimensional plane, and drawn a planar skeleton image sequence according to a standard of an OpenPose skeleton image.

The Control Net can only input a two-dimensional planar skeleton image, so that after the joint coordinates (that is, the three-dimensional incomplete posture data) of the three-dimensional human body are obtained, pre-processing needs to be performed on the joint coordinates. One frame of three-dimensional human body posture is imported into Blender, a virtual camera is set, and proper virtual camera parameters (including intrinsic and extrinsic parameters of the virtual camera) are set, so that a whole human body skeleton is located in the middle of a photographed picture, and the intrinsic and extrinsic parameters of the virtual camera are recorded. Reference values of the used virtual camera parameters are as follows: a resolution is 512*512, a focal length is 50 mm, a sensor size is 36 mm, a distance to the human body skeleton is 8 m, and flush with a waist root node. An intrinsic parameter matrix and an extrinsic parameter matrix of the virtual camera are calculated according to the virtual camera parameters. That is, the joint coordinates of the three-dimensional human body may be projected onto a two-dimensional imaging plane to obtain two-dimensional coordinates corresponding to joints on an image. In this case, joint points in corresponding colors need to be drawn, according to bone and joint colors specified in an OpenPose algorithm, on a black image with a size of 512*512 according to the calculated two-dimensional coordinates of the joints, and the joints are then connected by using corresponding colors to obtain a bone, so as to form a planar skeleton image, namely, a posture skeleton image.

Step 902: Generate descriptors according to an action sequence description and a text-to-image descriptor template.

Before an image is generated, a set of text-to-image positive descriptor templates and negative descriptor templates may be first formulated, so that the image can generate content in positive descriptors as much as possible and avoid generating content in negative descriptors as much as possible. In addition, when the human body image of each action sequence is generated, the positive descriptors may be combined with a text description of the action, so that the generated image better conforms to the action, for example, individual behaviors such as standing, walking, or kicking, or interactive behaviors such as toasting.

The text-to-image descriptor template includes a positive descriptor template and a negative descriptor template, and the positive descriptor template includes at least one positive descriptor and a description text of the preset posture, where the positive descriptor may be a fixed template, and the description text of the preset posture may be changed according to different requirements. The negative descriptor template includes at least one negative descriptor, and the negative descriptor is a fixed template.

In some embodiments, a used positive descriptor template is:
"(masterpiece, best quality, ultra-detailed, best shadow), HD, high resolution, best details, 1boy, perfect hand, white T-shirt, black short pants, black shoes, short black hair, simple background, white background, {action prompt}".
{action prompt} and braces need to be replaced with a text description of a corresponding action, for example, "a man kicks something or someone with his left leg", so that a final positive descriptor template is:
"(masterpiece, best quality, ultra-detailed, best shadow), HD, high resolution, best details, 1boy, perfect hand, white T-shirt, black short pants, black shoes, short black hair, simple background, white background, a man kicks something or someone with his left leg".

In some embodiments, a used negative descriptor template is:
"(worst quality:2), (low quality:2), (normal quality:2), lowers, normal quality, (monochrome:1.2), (grayscale:1.2), skin spots, acnes, skin blemishes, jpeg artifacts, cropped, bad anatomy, nsfw, hair ornaments, selfie, lowres, text, error, worst quality, low quality, normal quality, signature, watermark, username, blurry, the number of fingers does not conform to common sense, the number of limbs does not conform to common sense, joint distortion, the number of organs does not conform to common, the skin damage, body fat percentage does not conform to common sense".

Step 903: Generate a two-dimensional posture image based on the stable diffusion text-to-image model and a posture control plug-in.

The positive and negative descriptors are inputted into a descriptor text box of the SD text-to-image framework, one frame of planar skeleton image is extracted from the planar skeleton image sequence, the planar skeleton image is inputted into an image selection box of the Control Net plug-in in the SD framework, the OpenPose mode is selected, and None is selected for a processor. For setting of other parameters of the text-to-image framework, reference is as follows: a sampler is a data processing module (DPM)++2M a Karras, a sampling step is 20, a CFG (configuration file) scale is 7, and a size is 512*512. The human body posture image (that is, the two-dimensional posture image) with a specified action (that is, the preset posture) shown in FIG. 4 may be obtained by clicking generation.

Step 904: Extract a hand action in the two-dimensional posture image through three-dimensional hand posture estimation.

After a human body posture image with a proper hand is obtained, the hand action, namely, joint point data of joints of two hands in the two-dimensional posture image is extracted through three-dimensional hand posture estimation. An algorithm of the three-dimensional hand posture estimation may be an ACR hand posture estimation algorithm, to obtain the joint point data of the joints of the two hands in the image.

Step 905: Calculate a similarity with a hand action in a previous frame, and determine whether the similarity is high enough.

To ensure coherent and smooth hand actions in the whole action sequence, a time sequence stability determination mechanism is introduced in a generation process of each frame of image. A principle of this mechanism is to obtain hand posture matrices in a previous frame of generated image and a current frame of generated image, calculate a cosine similarity between the two matrices and a difference of each joint, and perform weighted combination on all the values to obtain a hand action similarity between the two frames of images. A weight of each joint is related to importance of the joint, and it is generally considered that a parent joint has a greater weight and a child joint has a smaller weight. When the similarity is excessively low, Step 903 is re-performed to obtain a current frame of image until a hand action difference between the previous and the current frames of images is not excessively great, where an affect is shown in FIG. 11. As can be seen, due to introduction of the time sequence stability determination mechanism, the hand actions in the previous and the current frames become more coherent and more proper. In this case, a current hand action is merged into a body posture for storage.

Step 906: Perform smoothing on the whole hand action sequence after all frames are generated, to finally obtain a complete entire body posture.

After completion of the hand action of an entire action is finished, smoothing processing is performed on an action sequence of the two hands again to finish the completion of the hand action.

Based on the above, according to the method provided in this embodiment, a method based on a Stable Diffusion text-to-image framework is proposed, a strong constraint is performed on a human body torso posture in a generated image by using the Control Net and a planar image of a human body skeleton, and rich prior information in the Stable Diffusion large model is used to generate a proper human body image in the torso posture based on descriptors. Therefore, even an action interacting with an item can be constrained by using the descriptors, so that more proper and diversified hand postures can be obtained. In addition, the time sequence stability determination mechanism for the hand posture is further introduced, so that a generated hand posture sequence is smoother.

According to the method provided in this embodiment, a Stable Diffusion and Control Net text-to-image method can be used to complete a proper hand posture for three-dimensional human body posture data without a hand posture, so that a virtual person can be driven more precisely, and in a deep learning field of human body data generation, an open-source human body posture data set can be used more effectively and data collection costs can be reduced. After a three-dimensional human body posture sequence without a hand posture is obtained, re-projection is first performed on a two-dimensional plane and each frame of planar skeleton image is drawn according to a standard of an OpenPose human body posture skeleton image. Descriptors configured for text-to-image are then generated according to behavior labels of an action sequence. The descriptors and all planar skeleton images are then inputted into the Stable Diffusion text-to-image framework configured with the Control Net plug-in, to generate a human body planar image with a corresponding posture. In this case, a posture of a human body hand in the generated image may be obtained by using a three-dimensional hand posture estimation algorithm, thereby implementing posture data completion. In addition, to make hand actions of the whole posture sequence smoother, when a current frame of image is generated, a similarity between a hand posture in the current frame and a hand posture in a previous frame is calculated, to eliminate a problem of sharp changes of the hand posture.

According to the method provided in this embodiment, when facing body action data without hand actions, there is no need to additionally collect the hand actions, there is also no need to train a deep learning model, and hand action completion can be implement by only using the SD text-to-image framework. In addition, generated actions are richer and closer, thereby effectively reducing manpower and material resources, and improving utilization of open-source human body posture data without a hand posture.

The posture data completion method provided in the embodiments of the present disclosure may be applied to an application program having a three-dimensional virtual object, for example, applied to a game application program to complete a posture of a three-dimensional virtual character, applied to a virtual reality (VR)/augmented reality (AR) application program to complete a joint point of a three-dimensional object or complete a key point of three-dimensional topography, applied to a virtual live streaming application program to complete a posture of a three-dimensional virtual uploader, applied to an artificial intelligence (AI) question/answering application program to complete a posture of an AI virtual figure, applied to an animation production application program to complete a posture of a three-dimensional animation character, or the like.

An exemplary description is provided by using an example in which the posture data completion method is applied to a game application program to complete a hand posture of a three-dimensional virtual character (three-dimensional object). The method may be performed by a client of the game application program or may be performed by a server of the game application program.

An action library is stored in the game application program. The action library is configured to store a complete posture sequence of at least one action of the three-dimensional virtual character. When the three-dimensional virtual character executing an action is rendered, a complete posture sequence of a target action may be directly read from the action library, and it may be displayed that the three-dimensional virtual character executes the target action by rendering the three-dimensional virtual character according to an order of the complete posture sequence of the target action.

An incomplete posture sequence of each action may be manually drawn by a developer, and locations of body joint points and movement tracks of the body joint points of the three-dimensional virtual character when executing an action are manually determined. However, there are a large number of hand joint points and movement tracks of the hand joint points are flexible, manually determining locations and the movement tracks of the hand joint points in an action brings a huge workload and has excessively low manual execution efficiency. Therefore, posture data completion may be performed by using the method provided in the embodiments of the present disclosure and based on an incomplete posture that is manually determined to complete the hand posture, to obtain a complete posture.
1. Read an incomplete posture sequence of the target action (that is, a preset posture) from the action library, where the incomplete posture sequence includes at least two frames of incomplete postures of the target action. Each frame of incomplete posture in the incomplete posture sequence includes three-dimensional joint point data (that is, first three-dimensional joint point data) of a body joint point. The body joint point includes: a head joint point, a neck joint point, a torso joint point, and a four limb joint point, and the hand joint points (a wrist joint point and a finger joint point) is missed in the body joint point.
2. Obtain one frame of incomplete posture from the at least two frames of incomplete postures. A text-to-image model is invoked to generate a two-dimensional posture image of the three-dimensional virtual character according to the frame of incomplete posture data and a posture description text of the target action, where the posture description text is configured for describing the target action.
3. Perform joint point recognition on the two-dimensional posture image to obtain three-dimensional joint point data (second three-dimensional joint point data) of the hand joint points of the three-dimensional virtual character.
4. Complete the frame of incomplete posture according to the three-dimensional joint point data of the hand joint points to obtain one frame of complete posture.
5. Continue to obtain a next frame of incomplete posture in the incomplete posture sequence, and perform the operations of 1, 2, 3, 4, and 5, to complete each frame incomplete posture in the target action, so as to obtain a complete posture sequence of the target action.

For a method of using the text-to-image model to complete the incomplete posture, reference may be made to the method provided in any of the foregoing embodiments, and details are not described herein again.

After posture data completion is performed for each action in the action library, the three-dimensional virtual character may be controlled to execute various actions according to posture sequences stored in the action library. For example, when a trigger operation of controlling the three-dimensional virtual character to execute the target action is received, the complete posture sequence corresponding to the target action is read from the action library, each frame of pictures of the three-dimensional virtual character is rendered according to an order of the complete posture sequence to obtain frames of pictures that the three-dimensional virtual character executes the target action, and it may be displayed that the three-dimensional virtual character executes the target action by playing the pictures sequentially.

Based on the above, by using the foregoing method, posture data completion may be performed for each action in the action library, and a complete posture of an action may be obtained by completing a hand posture based on manually drawn body posture data, thereby improving action development efficiency, and improving utilization of open-source three-dimensional posture data without a hand posture. In addition, the hand posture completed by using this method can perfectly match a body posture of the three-dimensional virtual character, thereby improving a posture data completion effect of the three-dimensional virtual character.

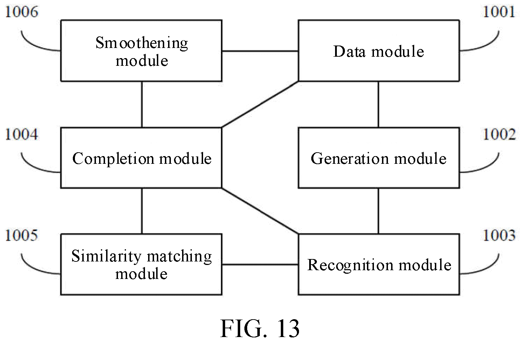

FIG. 13 is a schematic structural diagram of a posture data completion apparatus for a three-dimensional object according to an embodiment of the present disclosure. The apparatus may be implemented as all or a part of a computer device through software, hardware, or a combination thereof. The apparatus includes:
a data module 1001, configured to obtain three-dimensional incomplete posture data of the three-dimensional object in a preset posture, where the three-dimensional incomplete posture data includes first three-dimensional joint point data of some joint points of the three-dimensional object;
a generation module 1002, configured to invoke a text-to-image model to generate a two-dimensional posture image of the three-dimensional object in the preset posture according to the three-dimensional incomplete posture data and a posture description text, where the posture description text is configured for describing the preset posture;
a recognition module 1003, configured to perform joint point recognition on the two-dimensional posture image to obtain second three-dimensional joint point data of missing joint points of the three-dimensional object other than the some joint points; and
a completion module 1004, configured to combine the second three-dimensional joint point data and the three-dimensional incomplete posture data to obtain three-dimensional complete posture data of the three-dimensional object.

In an embodiment, the text-to-image model includes a posture control plug-in, and the posture control plug-in is configured to constrain, according to a posture skeleton image, the two-dimensional posture image generated by the text-to-image model;
the generation module 1002 is configured to map the three-dimensional incomplete posture data to a two-dimensional plane to obtain the posture skeleton image; and
the generation module 1002 is configured to: input the posture description text into the text-to-image model, and invoke the posture control plug-in to constrain an image generation process of the text-to-image model according to the posture skeleton image, to obtain the two-dimensional posture image, where
postures of the some joint points in the two-dimensional posture image are consistent with the posture skeleton image.

In an embodiment, the text-to-image model includes a first network and a second network;
the posture control plug-in includes a first zero convolutional layer, a network copy of the first network, and a second zero convolutional layer, where the network copy is a network obtained through initialization and training by using a network structure and a network parameter of the first network;
the generation module 1002 is configured to input the posture description text into the first network to obtain a text feature;
the generation module 1002 is configured to input the posture skeleton image into the first zero convolutional layer to obtain a posture convolution result;
the generation module 1002 is configured to add the posture convolution result to a random noise matrix to obtain a constraint noise matrix, where the random noise matrix is a random matrix that conforms to Gaussian distribution;
the generation module 1002 is configured to input the constraint noise matrix and the posture skeleton image into the network copy to obtain a first constraint feature;
the generation module 1002 is configured to input the first constraint feature into the second zero convolutional layer to obtain a second constraint feature;
the generation module 1002 is configured to add the second constraint feature to the text feature to obtain a text constraint feature; and
the generation module 1002 is configured to input the text constraint feature and the posture description text into the second network to obtain the two-dimensional posture image.

In an embodiment, the first network includes at least one encoder; and the second network includes at least one decoder.

In an embodiment, the posture description text includes a positive descriptor and a negative descriptor, where
the positive descriptor includes a positive requirement text of the two-dimensional posture image, and the positive descriptor includes the preset posture; and
the negative descriptor includes at least one descriptor configured for describing an image defect, and the negative descriptor is configured for guiding the text-to-image model to avoid generating a defect image having the image defect.

In an embodiment, the three-dimensional incomplete posture data is one frame of posture data in an action sequence of the three-dimensional object, and the action sequence includes at least two frames of posture data; and the apparatus further includes:
a similarity matching module 1005, configured to: calculate, after joint point recognition is performed on the two-dimensional posture image to obtain the second three-dimensional joint point data of the missing joint points of the three-dimensional object other than the some joint points, a posture similarity between first joint point data and second joint point data, where the first joint point data includes the second three-dimensional joint point data in the two-dimensional posture image, and the second joint point data includes second three-dimensional joint point data in historical posture data; and the historical posture data includes at least one frame of posture data that is located before the three-dimensional incomplete posture data in the action sequence; re-perform the following steps in a case that the posture similarity between the first joint point data and the second joint point data is less than a similarity threshold until the posture similarity is not less the similarity threshold;
invoke the text-to-image model to generate the two-dimensional posture image of the three-dimensional object in the preset posture according to the three-dimensional incomplete posture data and the posture description text; and
perform joint point recognition on the two-dimensional posture image to obtain the second three-dimensional joint point data.

In an embodiment, the three-dimensional joint point data includes three-dimensional location coordinates and a joint rotation angle;
the similarity matching module 1005 is configured to: obtain a completion matrix according to the three-dimensional location coordinates of the first joint point data; and obtain a historical matrix according to the three-dimensional location coordinates of the second joint point data;
the similarity matching module 1005 is configured to: calculate a cosine similarity between the completion matrix and the historical matrix to obtain a first similarity; and calculate a difference between the joint rotation angle of the first joint point data and the joint rotation angle of the second joint point data to obtain a second similarity; and
the similarity matching module 1005 is configured to perform weighted summation on the first similarity and the second similarity to obtain the posture similarity.

In an embodiment, there are at least two missing joint points;
the similarity matching module 1005 is configured to calculate the difference between the joint rotation angle of the first joint point data and the joint rotation angle of the second joint point data to obtain a joint rotation angle difference of each missing joint point; and
the similarity matching module 1005 is configured to perform weighted summation on at least two joint rotation angle differences according to a weight of each missing joint point in the missing joint points to obtain the second similarity.

In an embodiment, a weight of a parent node is higher than a weight of a child node in the missing joint points; and a number of joint points between the parent node and a root node in the three-dimensional object is a first number, a number of joint points between the child node and the root node is a second number, and the first number is less than the second number.

In an embodiment, the three-dimensional incomplete posture data is one frame of posture data in an action sequence of the three-dimensional object, and the action sequence includes at least two frames of posture data; and the apparatus further includes:
a smoothening module 1006, configured to perform, after the second three-dimensional joint point data is added to the three-dimensional incomplete posture data to complete the three-dimensional incomplete posture data, to obtain the three-dimensional complete posture data of the three-dimensional object, smoothing processing on the three-dimensional complete posture data according to adjacent posture data in the action sequence to obtain three-dimensional smooth posture data, where
the adjacent posture data includes: at least one frame of posture data located before the three-dimensional incomplete posture data in the action sequence and at least one frame of posture data located after the three-dimensional incomplete posture data in the action sequence;
the adjacent posture data includes: at least one frame of posture data located before the three-dimensional incomplete posture data in the action sequence; or
the adjacent posture data includes: at least one frame of posture data located after the three-dimensional incomplete posture data in the action sequence.

In an embodiment, the two-dimensional plane is a two-dimensional imaging plane of a virtual camera, and mapping the three-dimensional incomplete posture data to the two-dimensional plane to obtain the posture skeleton image includes:
the generation module 1002 is configured to map the three-dimensional incomplete posture data to the two-dimensional imaging plane of the virtual camera according to a parameter of the virtual camera to obtain a joint point image, where the joint point image includes two-dimensional joint point coordinates of at least two joint points of the some joint points; and
the generation module 1002 is configured to connect the two-dimensional joint point coordinates of the at least two joint points of the some joint points in the joint point image according to a joint point connection relationship of the at least two joint points of the some joint points to obtain the posture skeleton image.

In an embodiment, the parameter of the virtual camera includes at least one of coordinates of the virtual camera, a location of the virtual camera relative to the three-dimensional object, and a built-in parameter of the virtual camera.

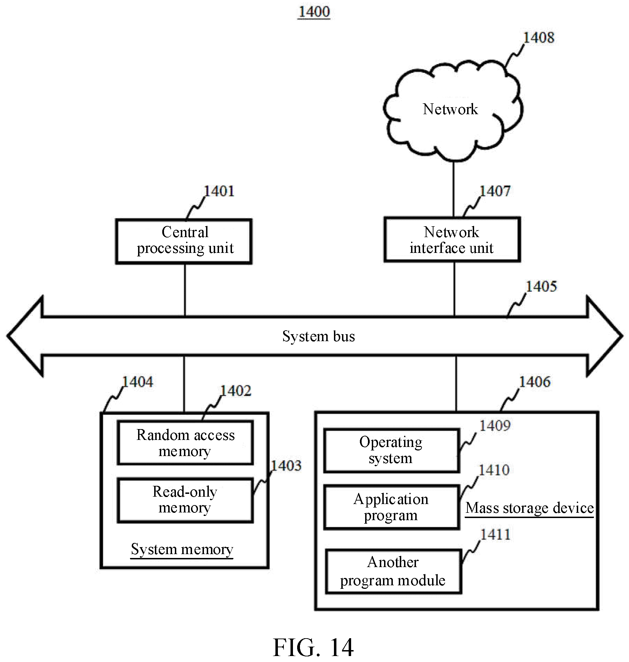

FIG. 14 is a structural block diagram of a computer device 1400 according to an embodiment of the present disclosure. The computer device may be implemented as the server in the foregoing solution in the present disclosure. The computer device 1400 includes a central processing unit (CPU) 1401, a system memory 1404 including a random access memory (RAM) 1402 and a read-only memory (ROM) 1403, and a system bus 1405 connecting the system memory 1404 and the CPU 1401. The computer device 1400 further includes a mass storage device 1406 configured to store an operating system 1409, an application program 1410, and another program module 1411.

The mass storage device 1406 is connected to the CPU 1401 through a mass storage controller (not shown) connected to the system bus 1405. The mass storage device 1406 and a computer-readable medium associated with the mass storage device provide non-volatile storage for the computer device 1400. In other words, the mass storage device 1406 may include a computer-readable medium (not shown) such as a hard disk or a compact disc read-only memory (CD-ROM) drive.

Without loss of generality, the computer-readable medium may include a computer storage medium and a communication medium. The computer storage medium includes volatile and non-volatile media, and removable and non-removable media implemented by using any method or technology for storing information such as computer-readable instructions, data structures, program modules, or other data. The computer storage medium includes a RAM, an erasable programmable ROM (EPROM), an electrically-erasable programmable ROM (EEPROM), a flash memory or another solid-state memory technology, a CD-ROM, a digital versatile disc (DVD) or another optical memory, a magnetic cassette, a magnetic tape, a magnetic disk memory, or another magnetic storage device. Certainly, a person skilled in the art may be aware that the computer storage medium is not limited to the foregoing several types. The system memory 1404 and the mass storage device 1406 may be collectively referred to as a memory.

According to various embodiments of the present disclosure, the computer device 1400 may further be connected to a remote computer on a network such as the Internet for execution. In other words, the computer device 1400 may be connected to a network 1408 through a network interface unit 1407 connected to the system bus 1405, or may be connected to another type of network or a remote computer system (not shown) through the network interface unit 1407.

The memory further includes at least one computer program. The at least one computer program is stored in the memory. The CPU 1401 executes the at least one program to implement all or some steps of the posture data completion method for a three-dimensional object provided in the foregoing embodiments.

An embodiment of the present disclosure further provides a computer device, including a processor and a memory. The memory has at least one computer program stored therein, and the at least one computer program is loaded and executed by the processor to implement the posture data completion method for a three-dimensional object provided in the foregoing method embodiments.

An embodiment of the present disclosure further provides a computer-readable storage medium. The storage medium has at least one computer program stored therein, and the at least one computer program is loaded and executed by a processor to implement the posture data completion method for a three-dimensional object provided in the foregoing method embodiments.

An embodiment of the present disclosure further provides a computer program product, including a computer program, the computer program being stored in a computer-readable storage medium. A processor of a computer device reads the computer program from the computer-readable storage medium and executes the computer program, to cause the computer device to perform and implement the posture data completion method for a three-dimensional object provided in the foregoing method embodiments.

In a specific implementation of the present disclosure, when the foregoing embodiments of the present disclosure are applied to specific products or technologies, for involved data, historical data, and user-related data processing such as profiles associated with user identity or characteristics, permission or consent of the user needs to be obtained, and collection, use, and processing of the related data need to comply with relevant laws, regulations, and standards of relevant countries and regions.

Unless otherwise clearly defined in this specification, all terms used in the claims are explained according to common meanings of the terms in the technical field. Unless otherwise clearly stated, all references to "one element/apparatus/component/device/operation" is openly interpreted as at least one instance of the indicated element, apparatus, component, device, or operation. Unless clearly stated, the operations of any method disclosed in this specification are not necessarily performed according to an exact order disclosed herein.

"A plurality of" mentioned in this specification means two or more. And/or describes an association relationship for describing associated objects and represents that three relationships may exist. For example, A and/or B may represent the following three cases: Only A exists, both A and B exist, and only B exists. The character "/" generally indicates an "or" relationship between the associated objects.

A person of ordinary skill in the art may understand that all or some of the operations implementing the foregoing embodiments may be implemented by hardware, or may be implemented by a program instructing related hardware. The program may be stored in a computer-readable storage medium. The storage medium mentioned may be a read-only memory, a magnetic disk, an optical disc, or the like.

The foregoing descriptions are merely exemplary embodiments of the present disclosure, but are not intended to limit the present disclosure. Any modification, equivalent replacement, or improvement made within the spirit and principle of the present disclosure shall fall within the protection scope of the present disclosure.

## Claims

1. A method for generating posture data of a three-dimensional object, the method being executable by a computer device, and the method comprising:
obtaining three-dimensional incomplete posture data of the three-dimensional object in a preset posture, wherein the three-dimensional incomplete posture data comprises first three-dimensional joint point data of the three-dimensional object;
generating a two-dimensional posture image of the three-dimensional object in the preset posture by applying the three-dimensional incomplete posture data and a posture description text to a text-to-image model of the preset posture;
performing joint point recognition on the two-dimensional posture image to obtain second three-dimensional joint point data of the three-dimensional object; and
combining the second three-dimensional joint point data and the three-dimensional incomplete posture data to obtain three-dimensional complete posture data of the three-dimensional object.

2. The method according to claim 1, wherein generating the two-dimensional posture image of the three-dimensional object in the preset posture by applying the three-dimensional incomplete posture data and the posture description text to the text-to-image model of the preset posture comprises:
mapping the three-dimensional incomplete posture data to a two-dimensional plane to obtain a posture skeleton image; and
inputting the posture description text into the text-to-image model, and invoking a posture control plug-in of the text-to-image model to constrain an image generation process of the text-to-image model according to the posture skeleton image to obtain the two-dimensional posture image, wherein postures of joint points in the two-dimensional posture image are consistent with the posture skeleton image.

3. The method according to claim 2, wherein the text-to-image model comprises a first network and a second network;
the posture control plug-in comprises a first zero convolutional layer, a network copy of the first network, and a second zero convolutional layer, wherein the network copy is a network obtained through initialization and training by using a network structure and a network parameter of the first network; and
the inputting the posture description text into the text-to-image model, and invoking the posture control plug-in of the text-to-image model to constrain the image generation process of the text-to-image model according to the posture skeleton image to obtain the two-dimensional posture image of the three-dimensional object comprises:
inputting the posture description text into the first network to obtain a text feature;
inputting the posture skeleton image into the first zero convolutional layer to obtain a posture convolution result;
adding the posture convolution result to a random noise matrix to obtain a constraint noise matrix, wherein the random noise matrix is a random matrix that conforms to Gaussian distribution;
inputting the constraint noise matrix and the posture skeleton image into the network copy to obtain a first constraint feature; inputting the first constraint feature into the second zero convolutional layer to obtain a second constraint feature;
adding the second constraint feature to the text feature to obtain a text constraint feature; and
inputting the text constraint feature and the posture description text into the second network to obtain the two-dimensional posture image.

4. The method according to claim 3, wherein the first network comprises at least one encoder; and the second network comprises at least one decoder.

5. The method according to any one of claims 1 to 4, wherein the posture description text comprises a positive descriptor and a negative descriptor, wherein
the positive descriptor comprises a positive requirement text of the two-dimensional posture image, and the positive descriptor comprises the preset posture; and
the negative descriptor comprises at least one descriptor configured for describing an image defect, and the negative descriptor is configured for guiding the text-to-image model to avoid generating a defect image having the image defect.

6. The method according to any one of claims 1 to 5, wherein the three-dimensional incomplete posture data is one frame of posture data in an action sequence of the three-dimensional object, and the action sequence comprises at least two frames of posture data; and after the performing joint point recognition on the two-dimensional posture image to obtain second three-dimensional joint point data of the three-dimensional object, the method further comprises:
calculating a posture similarity between first joint point data and second joint point data, wherein the first joint point data comprises the second three-dimensional joint point data in the two-dimensional posture image, and the second joint point data comprises second three-dimensional joint point data in historical posture data; and the historical posture data comprises at least one frame of posture data that is located before the three-dimensional incomplete posture data in the action sequence;
re-performing the following operations when the posture similarity between the first joint point data and the second joint point data is less than a similarity threshold until the posture similarity is not less the similarity threshold;
invoking the text-to-image model to generate the two-dimensional posture image of the three-dimensional object in the preset posture according to the three-dimensional incomplete posture data and the posture description text; and
performing joint point recognition on the two-dimensional posture image to obtain the second three-dimensional joint point data.

7. The method according to claim 6, wherein the three-dimensional joint point data comprises three-dimensional location coordinates and a joint rotation angle; and the calculating a posture similarity between first joint point data and second joint point data comprises:
obtaining a completion matrix according to the three-dimensional location coordinates of the first joint point data; obtaining a historical matrix according to the three-dimensional location coordinates of the second joint point data;
calculating a cosine similarity between the completion matrix and the historical matrix to obtain a first similarity; calculating a difference between the joint rotation angle of the first joint point data and the joint rotation angle of the second joint point data to obtain a second similarity; and
performing weighted summation on the first similarity and the second similarity to obtain the posture similarity.

8. The method according to claim 7, wherein there are at least two missing joint points; and
the calculating a difference between the joint rotation angle of the first joint point data and the joint rotation angle of the second joint point data to obtain a second similarity comprises:
calculating the difference between the joint rotation angle of the first joint point data and the joint rotation angle of the second joint point data to obtain a joint rotation angle difference of each missing joint point; and
performing weighted summation on at least two joint rotation angle differences according to a weight of each missing joint point in the missing joint points to obtain the second similarity.

9. The method according to claim 8, wherein a weight of a parent node is higher than a weight of a child node in the missing joint points; and a number of joint points between the parent node and a root node in the three-dimensional object is a first number, a number of joint points between the child node and the root node is a second number, and the first number is less than the second number.

10. The method according to any one of claims 1 to 9, wherein the three-dimensional incomplete posture data is one frame of posture data in the action sequence of the three-dimensional object, and the action sequence comprises at least two frames of posture data; and after the combining the second three-dimensional joint point data and the three-dimensional incomplete posture data to obtain three-dimensional complete posture data of the three-dimensional object, the method further comprises:
performing smoothing processing on the three-dimensional complete posture data according to adjacent posture data in the action sequence to obtain three-dimensional smooth posture data, wherein
the adjacent posture data comprises: at least one frame of posture data located before the three-dimensional incomplete posture data in the action sequence and at least one frame of posture data located after the three-dimensional incomplete posture data in the action sequence;
the adjacent posture data comprises: at least one frame of posture data located before the three-dimensional incomplete posture data in the action sequence; or
the adjacent posture data comprises: at least one frame of posture data located after the three-dimensional incomplete posture data in the action sequence.

11. The method according to any one of claims 2 to 10, wherein the two-dimensional plane is a two-dimensional imaging plane of a virtual camera, and the mapping the three-dimensional incomplete posture data to a two-dimensional plane to obtain the posture skeleton image comprises:
mapping the three-dimensional incomplete posture data to the two-dimensional imaging plane of the virtual camera according to a parameter of the virtual camera to obtain a joint point image, wherein the joint point image comprises two-dimensional joint point coordinates of at least two joint points of the some joint points; and
connecting the two-dimensional joint point coordinates of the at least two joint points of the some joint points in the joint point image according to a joint point connection relationship of the at least two joint points of the some joint points to obtain the posture skeleton image.

12. The method according to claim 11, wherein the parameter of the virtual camera comprises at least one of coordinates of the virtual camera, a location of the virtual camera relative to the three-dimensional object, and a built-in parameter of the virtual camera.

13. An apparatus for generating posture data of a three-dimensional object, comprising:
a data module, configured to obtain three-dimensional incomplete posture data of the three-dimensional object in a preset posture, wherein the three-dimensional incomplete posture data comprises first three-dimensional joint point data of the three-dimensional object;
a generation module, configured to generate a two-dimensional posture image of the three-dimensional object in the preset posture by applying the three-dimensional incomplete posture data and a posture description text to a text-to-image model of the preset posture;
a recognition module, configured to perform joint point recognition on the two-dimensional posture image to obtain second three-dimensional joint point data of the three-dimensional object; and
a combination module, configured to combine the second three-dimensional joint point data and the three-dimensional incomplete posture data to obtain three-dimensional complete posture data of the three-dimensional object.

14. A computer device, comprising a processor and a memory, wherein the memory has at least one computer program stored therein, and the at least one computer program is loaded and executed by the processor to implement the posture data completion method for a three-dimensional object according to any one of claims 1 to 12.

15. A computer storage medium, having at least one computer program stored therein, wherein the at least one computer program is loaded and executed by a processor to implement the posture data completion method for a three-dimensional object according to any one of claims 1 to 12.

16. A computer program product, comprising a computer program, wherein the computer program is stored in a computer-readable storage medium; and the computer program is read from the computer-readable storage medium and executed by a processor of a computer device, to cause the computer device to perform the posture data completion method for a three-dimensional object according to any one of claims 1 to 12.
